# EUROPÄISCHE PATENTSCHRIFT

(11) **EP 0 568 891 B1**
(45) Veröffentlichungstag und Bekanntmachung des Hinweises auf die Patenterteilung: **10.03.1999**
(21) Anmeldenummer: 93106733.4
(22) Anmeldetag: 26.04.1993
(51) Int. Cl.: C08K 9/06, C08L 83/04

(54) **Verfahren zur kontinuierlichen Herstellung von Flüssigsiliconkautschuken**
Process for the continuous preparation of liquid silicone rubbers
Procédé de préparation en continu de caoutchoucs liquides à base de silicone

(30) Priorität: 08.05.1992 DE 4215205
(43) Veröffentlichungstag der Anmeldung: 10.11.1993
(73) Patentinhaber: GE Bayer Silicones GmbH & Co. KG, 40699 Erkrath (DE)
(72) Erfinder: Kohlgrüber, Klemens, Dr., W-5067 Kürten (DE); Wrobel, Dieter, Dr., W-5090 Leverkusen (DE); Buss, Günter, Dipl.-Ing., W-5090 Leverkusen 3 (DE); Feldner, Kurt, Dr., W-5090 Leverkusen (DE); Kurpat, Reinhard, Dr., W-5090 Leverkusen 3 (DE); Laubis, Martin, Dipl.-Ing., W-5090 Leverkusen (DE)

(56) Entgegenhaltungen:
- EP-A- 0 378 785
- EP-A- 0 432 761
- EP-A- 0 462 032
- FR-A- 2 635 782
- GB-A- 1 024 234
- US-A- 4 785 047

## Beschreibung

Gegenstand der vorliegenden Erfindung ist ein Verfahren zur kontinuierlichen Herstellung von Siliconkautschuken, insbesondere zweikomponentigen Flüssigsiliconkautschuken.

Kautschuke dieser Art bestehen im wesentlichen aus vernetzbaren Diorganosiloxanen und silylierten feinteiligen Kieselsäuren, sowie geringe Mengen Vernetzern, Katalysatoren und Inhibitoren, gegebenenfalls weiteren nicht- oder halbverstärkenden Füllstoffen.

Bekannt (z.B. EP-A 258 159, EP-A 234 226, EP-A 172 678) sind mehrere Verfahren zur kontinuierlichen Herstellung von Siliconkautschuken.

In der EP-A 172 678 wird die kontinuierliche Herstellung von Basismischungen für Flüssigsiliconkautschuke beschrieben, die nach Zusatz von Vernetzer und Katalysator nach dem Additionsprinzip vernetzen. Hierbei wird ein Mischverfahren beschrieben, bei der die Compoundierung in einem Temperaturbereich von 200°C bis 300°C ohne Füllstoffbeladungsmittel erfolgt.

Die EP-A 258 159 offenbart ein Verfahren zur kontinuierlichen Herstellung von Grundmischungen für heißvulkanisierbare Silicon-Elastomere auf Basis hochviskoser Polymere mit einer Viskosität von 1000 Pa.s. Hierbei werden auch sogenannte Antistrukturmittel eingesetzt, die nach der Beschreibung z.B. α,ω-Dihydroxydiorganopolysiloxane mit einer Viskosität von 20 bis 100 mPa.s sein können. Silazane werden nur im Zusammenhang mit dem Einsatz beladener Füllstoffe erwähnt (externe Beladung). Ein weiteres Kennzeichen des bekannten Verfahrens ist eine kurze Verweilzeit von 30 Sekunden bis 10 Minuten.

Aufgabe der vorliegenden Erfindung ist es dagegen, ein Verfahren zur vollständigen kontinuierlichen Compoundierung von vernetzungsfähigen Siliconkautschuken, insbesondere zur parallelen Herstellung beider Komponenten von Flüssigsiliconkautschuken, zur Verfügung zu stellen.

Darüber hinaus ist es Aufgabe der vorliegenden Erfindung, eine möglichst vollständige in-situ-Beladung von feinteiligen Kieselsäuren mit Silazanen und/oder Silanolen kontinuierlich durchzuführen.

Eine solche in-situ-Beladung mit Silazanen und/oder Silanolen erfordert längere Verweilzeiten als Compoundierverfahren mit anderen Füllstoffbeladungsmitteln (z.B. Dihydroxydiorganopolysiloxane), die die Füllstoffoberfläche nur unvollständig bedecken. Unvollständig silylierte (hydrophobierte) Füllstoffe führen aber zu relativ hohen Mischungsviskositäten und starker Verstrammungsneigung (Viskositätsanstieg nach Lagerung). Deshalb weisen Siliconkautschuke mit in-situ-Silazanbeladung, die in den bisher beschriebenen Aggregaten mit kurzer Verweilzeit hergestellt werden, die obengenannten Nachteile der anderen Beladungsmittel auf.

Eine weitere Aufgabe der vorliegenden Erfindung besteht darin, die für den Beladungsschritt erforderliche Menge Beladungsmittel auf ein Mindestmaß zu beschränken.

Die Aufgabe wird durch ein kontinuierliches Verfahren gelöst, bei dem in einem kontinuierlichen Mischer
a) Diorganopolysiloxan(e), Füllstoff(e) und Beladungsmittel gemischt werden, wobei die mit dem Füllstoff eingetragene Luft über Dome, in denen die Trennung von Füllstoffpartikeln und Luft erfolgt, abgezogen wird, und wobei das Beladungsmittel im Überschuß eingesetzt wird, anschließend die Mischung in einen weiteren kontinuierlichen Mischer überführt wird, in dem die in-situ-Beladung bei der Siedetemperatur des Beladungsmittels und/oder dessen Umsetzungsprodukten durchgeführt wird,
b) vor oder während der in-situ-Beladung der Füllstoffe die überschüssigen Beladungsmittel kontinuierlich destillativ abgetrennt, Kondensate zurückgeführt,
c) die nach b) verbleibende Füllstoff/Polymermischung und gegebenenfalls zusätzliche Diorganopolysiloxane zur Rückverdünnung ausgegast und anschließend
d) Vernetzer/Inhibitor/Diorganopolysiloxan bzw. Katalysator/Diorganopolysiloxan oder Peroxidvernetzer abgemischt werden,
wobei die mittlere Gesamtverweilzeit des Diroganopolysiloxans in den Stufen a) bis c) mehr als 15 Minuten beträgt.

Gegenstand der vorliegenden Erfindung ist daher ein Verfahren zur kontinuierlichen Herstellung von vernetzenden Siliconkautschuken auf Basis von vernetzbaren Diorganopolysiloxan(en), Vernetzer(n), Inhibitor(en), Katalysator(en), Füllstoff(en) und Füllstoffbeladungsmittel(n), wonach in einem kontinuierlichen Mischer
a) Diorganopolysiloxan(e), Füllstoff(e) und Beladungsmittel gemischt werden, wobei die mit dem Füllstoff eingetragene Luft über Dome, in denen die Trennung von Füllstoffpartikeln und Luft erfolgt, abgezogen wird, und wobei das Beladungsmittel im Überschuß eingesetzt wird, anschließend die Mischung in einen weiteren kontinuierlichen Mischer überführt wird, in dem die in-situ-Beladung bei der Siedetemperatur des Beladungsmittels und/oder dessen Umsetzungsprodukten durchgeführt wird,
b) vor oder während der in-situ-Beladung der Füllstoffe die überschüssigen Beladungsmittel kontinuierlich destillativ abgetrennt, Kondensate zurückgeführt,
c) die nach b) verbleibende Füllstoff/Polymermischung und gegebenenfalls zusätzliche Diorganopolysiloxane zur Rückverdünnung ausgegast und anschließend
d) Vernetzer/Inhibitor/Diorganopolysiloxan bzw. Katalysator/Diorganopolysiloxan oder Peroxidvernetzer abgemischt werden,
wobei die mittlere Gesamtverweilzeit des Diroganopolysiloxans in den Stufen a) bis c) mehr als 15 Minuten beträgt.

Mit dem erfindungsgemäßen Verfahren können alle Rezepturen, die bisher diskontinuierlich hergestellt wurden, produziert werden. Darüber hinaus erlaubt das erfindungsgemäße Verfahren gegenüber der diskontinuierlichen Fahrweise bei gleicher Qualität eine Reduktion der erforderlichen Beladungsmittelmengen.

Als Diorganopolysiloxane können solche der Formel 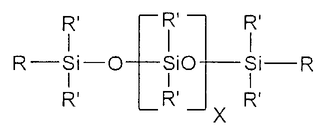 eingesetzt werden, wobei
- R und R': Alkylreste mit 1 bis 8 Kohlenstoffatomen, Arylreste, Vinylreste und Fluoralkylreste mit 3 bis 8 Kohlenstoffatomen sind und
- x: einen Wert von 10 bis 6000 besitzt.

Es können anstatt der Diorganopolysiloxane auch Copolymere mit nichtsiliciumhaltigen Einheiten verwendet werden. Daneben können auch verzweigte Polymere, nämlich solche der Formel SiO_{4/2}, RSiO_{3/2} und R₃SiO_{1/2} verwendet werden, wobei R die oben angegebene Bedeutung bestitzt.

Als Vernetzer können Hydrogensiloxane mit mindestens 3 SiH-Gruppen oder Peroxide eingesetzt werden. Darüber hinaus können auch Kettenverlängerer mit 2 SiH-Gruppen verwendet werden. Als Inhibitoren können Alkinole verwendet werden. Geeignete Katalysatoren für die Vernetzungsreaktion sind Vinylsiloxan-Platin-Komplexe.

Als verstärkende Füllstoffe können pyrogene oder gefällte feinteilige Kieselsäuren, bevorzugt pyrogene Kieselsäuren, mit einer BET-Oberfläche von mehr als 50 m²/g eingesetzt werden. Solche Füllstoffe weisen Schüttdichten von 0,1 kg/l, typischerweise 0,05 bis herab zu 0,025 kg/l,
auf. Daneben können auch Ruße und nichtverstärkende bzw. halbverstärkende Füllstoffe, wie z.B. Diatomeenerden oder Quarzmehle, verwendet werden. Die Menge des Füllstoffs kann 10 bis 60 Gew.-% der Gesamtmischung ausmachen. Als Füllstoffbeladungsmittel können Hexaalkyldisilazane mit Methyl- und Vinylgruppen zusammen mit Wasser verwendet werden. Bevorzugt sind Hexamethyldisilazan, Divinyltetramethyldisilazan und Wasser. Darüber hinaus eignen sich auch Silanole, z.B. Trimethylsilanol und Dimethylvinylsilanol, zusammen mit geringen Mengen Ammoniak-Wasser oder Disilazan/Wasser als Beladungsmittel. Typischerweise soll die Menge des Beladungsmittels mindestens 0,12 g pro 300 m² Füllstoffoberfäche betragen.

Im ersten Schritt des erfindungsgemäßen Verfahrens werden die Diorganopolysiloxane mit den Füllstoffen und Füllstoffbeladungsmitteln in einem kontinuierlich arbeitenden Mischer vereinigt. Die mit dem Füllstoff eingetragene Luft wird über Dome, in denen eine Trennung von Füllstoffpartikeln und Luft erfolgt, abgezogen. Für diesen Schritt eignen sich großvolumige, kühlbare Mischer mit freiem Volumen, z.B. ein Continous Universal Mixer der Fa. Baker Perkins oder ein Ap-Conti-Reaktor von Fa. List mit einer Austragsschnecke.

Im zweiten Schritt des erfindungsgemäßen Verfahrens erfolgt die in-situ-Beladung der eingesetzten Füllstoffe mit den Beladungsmitteln bei der Siedetemperatur der umgesetzten oder ursprünglichen Beladungsmittel (Silanole). Die entstehenden Destillate werden in einem Kühler kondensiert, in organische und wäßrige Phase getrennt, und entweder nur die organische Phase oder beide Phasen teilweise in den Mischer zurückgeführt. In einer weiteren Variante wird ein Teilstrom der Destillate dem ersten Mischer zugeführt. Für diesen Schritt eignen sich heizbare Mischer mit relativ hoher Verweilzeit und einem freien Volumen, z.B. ein Ap-conti-Reaktor von der Fa. List mit Austragsschnecke.

Im dritten Schritt werden die noch vorhandenen Beladungsmittelreste bei erhöhter Temperatur (bis 180°C) im Vakuum in einer Doppelwellenschnecke, z.B. ZSK von der Fa. Werner & Pfleiderer oder eine Doppelwellenschnecke von Baker Perkins, entfernt und gegebenenfalls im zweiten Teil des Aggregats mit Polydiorganosiloxan rückverdünnt.

Für diesen Verfahrensschritt eignet sich z.B. auch ein Co-Kneter der Fa. Buss.

Im letzten Schritt des erfindungsgemäßen Verfahrens erfolgt für den Fall einer parallelen Herstellung beider Komponenten von Flüssigsiliconkautschuken zunächst eine Auftrennung des Gemisches in zwei Teilströme mit getrennten Förderpumpen und nachfolgend die kombinierte Abmischung und Abkühlung in kühlbaren Statik-Mischern. Der eine Teilstrom wird mit Katalysator und Diorganopolysiloxanen und der andere Teilstrom mit Vernetzern, Inhibitoren und Diorganopolysiloxan versetzt.

Alternativ, kann für den Fall nur einer Komponente, der letzte Verfahrensschritt zusammen mit dem dritten Schritt in einem Aggregat (z.B. Doppelwellenschnecke mit ausreichender Länge) erfolgen.

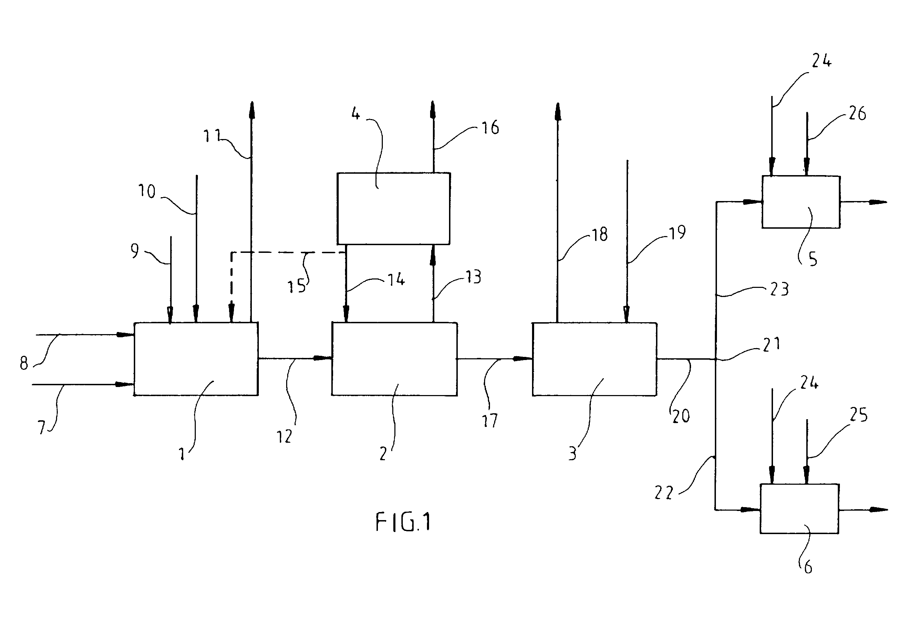

Fig. 1 beschreibt beispielhaft eine Anlage zur Durchführung des erfindungsgemäßen Verfahrens. Die Ziffern in der Figur beschreiben im einzelnen:
1 Mischer der 1. Stufe:
   Ap-conti-Reaktor der Fa. List, Typ AP 12 C,
   mit einem freien Volumen von 30,6 l,
2 Mischer der 2. Stufe:
   Ap-conti-Reaktor der Fa. List, Typ AP 12 C,
3 Mischer der 3. Stufe:
   Doppelwellenschnecke der Fa. Werner und Pfleiderer, Typ ZSK 37, mit einem freien Volumen von 1,3 l,
4 Kondensationseinrichtung für Silanol,
5,6 Statikmischer für die Einmischung von Katalysator bzw. Vernetzer und Inhibitoren zur Herstellung der Komponenten A und B des Zwei-Komponenten-Systems, z.B. Typ SMX der Fa. Sulzer.

In den Mischer werden durch Zufuhrleitungen 7 und 8 das Polymergemisch und der Füllstoff, über Zufuhrleitung 9 Wasser und über Zufuhrleitung 10 das Beladungsmittel jeweils über Dosierorgane eingeleitet Über Leitung 11 wird Pulverluft abgezogen.

Die Temperatur in Mischer 1 wird bei 20 bis 40°C gehalten; der Druck leicht unter Normaldruck, z.B. bis zu 100 mbar unter Normaldruck. Die Verweilzeit in Mischer 1 liegt zwischen 5 und 40 Minuten, um eine ausreichende Vermischung von Füllstoff, Polymer und Beladungsmittel zu gewährleisten.

Durch Leitung 12 wird die Mischung in Mischer 2 überführt Hier findet die Reaktion zwischen Beladungsmittel und Füllstoff unter Bildung von Silanolen bei einer Temperatur von 80 bis 110°C bei Normaldruck statt. Die Silanole, Wasser und andere flüchtige Bestandteile treten bei Leitung 13 aus dem Mischer 2 aus. Silanole werden im Kondensator 4 kondensiert und über Leitung 14, gegebenenfalls teilweise über Leitung 15, dem Gemisch wieder zugeführt. Nicht kondensierte flüchtige Bestandteile verlassen das System über Leitung 16.

Über Leitung 17 wird das Gemisch aus Mischer 2 nach einer Verweilzeit von 10 bis 40 Minuten dem Mischer 3 zugeführt. Hier wird die Reaktion bei einer Temperatur von 130 bis 160°C zu Ende geführt und verbliebene flüchtige Bestandteile über Leitung 18 bei einem Druck von kleiner 100 mbar abgezogen. Über Leitung 19 können zur Einstellung der Viskosität des Gemisches Siliconpolymere niedriger Viskosität ("Rückverdünnungspolymer") zugeführt werden. Bei 20 verläßt der noch Katalysator- bzw. Vernetzer-freie Flüssigsiliconkautschuk den Mischer 3.

Die weitere Einmischung von Katalysator 26 zur Herstellung der Komponente A und von Vemetzer und gegebenenfalls Inhibitoren 25 zur Herstellung der Komponente B erfolgt nun in getrennten Mischern 5 bzw. 6 entweder parallel gleichzeitig, wobei der Polymerförderstrom in Leitung 20 durch ein Teilungsorgan 21 auf Leitungen 22 und 23 aufgeteilt wird oder nacheinander, wenn 21 ein Ventil bezeichnet.

Den Mischern 5 und 6 können über Leitungen 24 ebenfalls Rückverdünnungspolymer zugeführt werden.

### Beispiel 1

Es wird eine Vorrichtung wie in Fig. 1 eingesetzt.

In den Mischer 1 werden eindosiert:

| | |
|---|---|
| 19 kg/h | eines Polydimethylsiloxangemisches mit Vinylendgruppen, Polymer 1 (Visk.: 10 Pa.s), Polymer 2 (Visk.: 65 Pa.s), Mischungsverhältnis: 1:2,5; |
| 1,1 kg/h | Hexamethyldisilazan als Beladungsmittel; |
| 0,6 kg/h | Wasser und |
| 8,3 kg/h | pyrogene Kieselsäure (BET 300 m²/g). |

Die Temperatur wird bei 30°C gehalten. Die Pulverluft wird bei 0,98 bar abgezogen.
Die mittlere Verweilzeit des Polysiloxangemisches beträgt 34 Minuten.

### Mischer 2:

0,5 kg/h organische Phase werden kondensiert und in Mischer 2 zurückgeführt. Die Verweilzeit beträgt 33 Minuten, der Druck 1 bar, die Temperatur 90 bis 100°C.

### Mischer 3:

Temperatur = 150°C
Vakuum: 20 mbar; Verweilzeit: 2 Minuten.
Zur Rückverdünnung werden 3,7 kg/h Polymer 1 zugesetzt.
Teilungsverhältnis des Hauptstromes: 1:1.

### Statikmischer 5:

Es werden 1,9 g/h Pt-Katalysator und zur weiteren Rückverdünnung 1600 g/h Polymer 1 zugegeben. Verweilzeit 2,5 Minuten.

### Statikmischer 6:

Es werden 500 g/h Hydrogensiloxan (4 mmol SiH/g) als Vernetzer und 13 g/h 2-Methylbutin-3-ol-2 als Inhibitor sowie 1100 g/h Polymer 1 zur weiteren Rückverdünnung zugegeben. Verweilzeit 2,5 Minuten.

Die beiden Teilströme besitzen am Austrag eine Temperatur von 50°C. Nach Mischung der beiden Komponenten und Aushärtung bei 175°C (10 min) erhält man ein hochtransparentes Vulkanisat.

### Beispiel 2

Beispiel 1 wird wiederholt mit der Abweichung, daß in den Mischer 1

| | |
|---|---|
| 1,1 kg/h | einer Mischung aus 20 Teilen Hexamethyldisilazan und 1 Teil Tetramethyldivinyldisilazan |

als Beladungsmittel eindosiert werden.

Nach Mischung der Komponenten A und B und Aushärung bei 175°C über 10 min wird ein hochtransparentes Vulkanisat erhalten.

### Beispiel 3

Beispiel 1 wird wiederholt mit der Abweichung, daß in den Mischer 1

| | |
|---|---|
| 1,3 kg/h | Trimethylsilanol und |
| 0,005 kg/h | Ammoniakwasser als Beladungsmittel eindosiert werden und kein zusätzliches Wasser zugeführt wird. |

Nach Mischung der Komponenten A und B und Aushärtung bei 175°C über 10 min wird eine hochtransparentes Vulkanisat erhalten.

### Beispiel 4

Vorrichtung wie in Beispiel 1.
In den Mischer 1 werden eindosiert:

| | |
|---|---|
| 38 kg/h | eines Polydimethylsiloxangemisches mit Vinylendgruppen, Polymer 1 (Visk.: 10 Pa.s), Polymer 2 (Visk.: 65 Pa.s), Mischungsverhältnis: 1:2,5; |
| 2,2 kg/h | Hexamethyldisilazan; |
| 1,2 kg/h | Wasser und |
| 16,6 kg/h | verdichtete pyrogene Kieselsäure (BET 300 m²/g). |

Temperatur: 33°C, Druck: 0,98 bar; Verweilzeit: 17 Minuten.

### Mischer 2:

Temperatur = 90 bis 100°C, Verweilzeit: 16 Minuten, Druck: 1 bar,
Kondensat: 1,0 g/h organische Phase werden in Mischer 2 zurückgeführt.

### Mischer 3:

Temperatur = 150°C, Druck: 20 mbar, Verweilzeit: 1 Minute,
Rückverdünnung: 7,4 kg/h Polymer 1,
Teilungsverhältnis des Hauptstromes: 1:1.

### Statikmischer 4:

| | |
|---|---|
| 3,8 g/h | Pt-Katalysator und |
| 3200 g/h | Polymer 1, |

Verweilzeit: 1,3 Minuten.

### Statikmischer 5:

| | |
|---|---|
| 1000 g/h | Hydrogensiloxan (4 mmol SiH/g), |
| 26 g/h | 2-Methylbutin-3-ol-2 und |
| 2200 g/h | Polymer 1, |

Verweilzeit: 1,3 Minuten.

Die beiden Teilströme besitzen am Austrag eine Temperatur von 61°C. Nach Mischung der beiden Komponenten und Aushärtung bei 175°C (10 min) erhält man ein hochtransparentes Vulkanisat.

### Beispiel 5

Apparatur wie in Beispiel 1.
In den Mischer 1 werden eindosiert:

| | |
|---|---|
| 19 kg/h | eines Polydimethylsiloxangemisches mit Vinylendgruppen, Polymer 1 (Visk.: 10 Pa.s), Polymer 2 (Visk.: 65 Pa.s), Mischungsverhältnis: 1:2,5; |
| 1,0 kg/h | Hexamethyldisilazan, |
| 0,3 kg/h | org. Phase der Kondensate aus Mischer 2, |
| 0,6 kg/h | Wasser und |
| 8,3 kg/h | pyrogene Kieselsäure (BET 300 m²/g). |

Temperatur = 30°C, Druck: 0,98 bar, Verweilzeit: 34 Minuten.

### Mischer 2:

Temperatur = 90 bis 100°C, Druck: 1 bar, Verweilzeit: 34 Minuten;

### Kondensat:

0,5 kg/h organische Phase, davon werden 0,2 kg/h in Mischer 2 zurückgeführt.

### Mischer 3:

Temperatur = 150°C, Druck: 20 mbar, Verweilzeit: 2 Minuten
Rückverdünnung: 3,7 kg/h Polymer 1.
Teilungsverhältnis des Hauptstromes: 1:1.

### Statikmischer 4:

| | |
|---|---|
| 1,9 g/h | Pt-Katalysator und |
| 1600 g/h | Polymer 1. |

Verweilzeit: 2,5 Minuten.

### Statikmischer 5:

| | |
|---|---|
| 500 g/h | Hydrogensiloxan (4 mmol SiH/g), |
| 13 g/h | 2-Methylbutin-3-ol-2 und |
| 1100 g/h | Polymer 1. |

Verweilzeit: 2,5 Minuten. Die beiden Teilströme besitzen am Austrag eine Temperatur von 50°C. Nach Mischung der beiden Komponenten und Aushärtung bei 175°C (10 min) erhält man ein hochtransparentes Vulkanisat.

### Beispiel 6

Beispiel 1 wird wiederholt mit der Abweichung, daß in die Statikmischer 4 und 5 jeweils
70 g/h 2,5-Dimethyl-2,5-(tert.-butylperoxy)-hexan
anstelle von Katalysator, Vernetzer, Inhibitor und Verdünnungspolymer zugegeben wird.

Das erhaltene Ein-Komponenten-System ergibt nach Aushärtung bei 175°C über 10 min ein hochtransparentes Vulkanisat.

### Beispiel 7 (Vergleich)

Anstelle der Mischer 1, 2 und 3 wird eine Doppelwellenschnecke Typ ZSK 34/22/1500 der Fa. Werner und Pfleiderer eingesetzt.

In die Schnecke werden eindosiert:

| | |
|---|---|
| 2,4 kg/h | eines Polydimethylsiloxangemisches mit Vinylendgruppen, Polymer 1 (Visk.: 10 Pa.s), Polymer 2 (Visk.: 65 Pa.s), Mischungsverhältnis: 1:2,5; |
| 0,14 kg/h | Hexamethyldisilazan |
| 0,08 kg/h | Wasser und |
| 1,05 kg/h | pyrogene Kieselsäure (BET 300 m²/g). |

Kurz vor dem Ende der Schnecke erfolgt eine Rückverdünnung mit:

| | |
|---|---|
| 0,47 kg/h | Polymer 1 |

Die Gesamtverweilzeit in der Schnecke beträgt 5,7 Minuten.
Kurz hinter dem Eintrag wird die Temperatur zur in-situ-Beladung des Füllstoffs bei 100°C gehalten. Der Druck beträgt hier ca. 1,5 bar.

Am hinteren Ende der Schnecke wird die Temperatur auf 160°C zum Ausdampfen bei 20 mbar erhöht.
Am Austrag beträgt die Temperatur noch 150°C.
Der Druck zum Austrag beträgt ca. 2 bar.

Die so hergestellte Grundmischung (ohne Katalysator bzw. Vernetzer) zeigt schon nach kurzer Lagerzeit (2 Wochen) bei Raumtemperatur eine Verdopplung der Viskosität.

Tabelle 1 zeigt die Eigenschaften der aus den Beispielen erhaltenen Kautschuke und Vulkanisate.

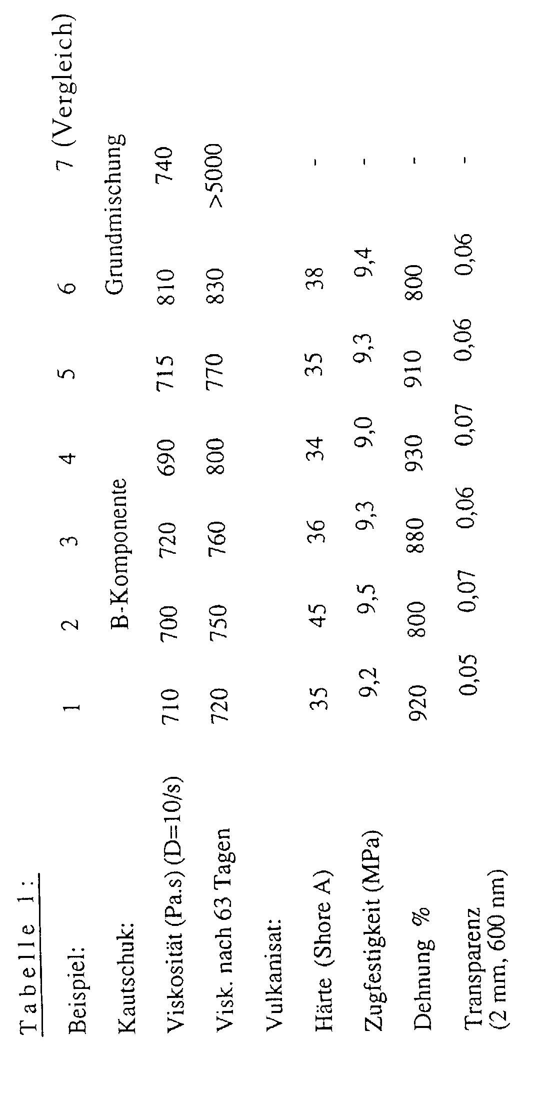

## Patentansprüche

1. Verfahren zur kontinuierlichen Herstellung von vernetzenden Siliconkautschuken auf Basis von vernetzbaren Diorganopolysiloxan(en), Vernetzer(n), Inhibitor(en), Katalysator(en), Füllstoff(en) und Füllstoffbeladungsmittel(n), dadurch gekennzeichnet, daß in einem kontinuierlichen Mischer
a) Diorganopolysiloxan(e), Füllstoff(e) und Beladungsmittel gemischt werden, wobei die mit dem Füllstoff eingetragene Luft über Dome, in denen die Trennung von Füllstoffpartikeln und Luft erfolgt, abgezogen wird, und wobei das Beladungsmittel im Überschuß eingesetzt wird, anschließend die Mischung in einen weiteren kontinuierlichen Mischer überführt wird, in dem die In-situ Beladung bei der Siedetemperatur des Beladungsmittels und/oder dessen Umsetzungsprodukten durchgeführt wird,
b) vor oder während der In-situ-Beladung der Füllstoffe überschüssiges Beladungsmittel kontinuierlich destillativ abgetrennt, Kondensate zurückgeführt,
c) die nach b) verbleibende Füllstoff/Polymermischung und gegebenenfalls zusätzliche Diorganopolysiloxane zur Rückverdünnung ausgegast und anschließend
d) Vernetzer/Inhibitor/Diorganopolysiloxan bzw. Katalysator/Diorganopolysiloxan oder Peroxidvernetzer abgemischt werden,
wobei die mittlere Gesamtverweilzeit des Diorganopolysiloxans in den Stufen a) bis c) mehr als 15 Minuten beträgt.

2. Verfahren nach Anspruch 1, dadurch gekennzeichnet, daß als Beladungsmittel Hexamethyldisilazan, Divinyltetramethyldisilazan und Wasser verwendet werden.

3. Verfahren nach Anspruch 1, dadurch gekennzeichnet, daß als Beladungsmittel Trimethylsilanol, Dimethylvinylsilanol und geringe Mengen Ammoniakwasser oder alternativ Hexamethyldisilazan/Divinyltetramethyldisilazan/Wasser verwendet werden.

4. Verfahren nach einem der Ansprüche 1 bis 3, dadurch gekennzeichnet, daß die Verfahrensschritte in einem großvolumigen kühlbaren Mischer mit freiem Volumen durchgeführt werden.

5. Verfahren nach einem der Ansprüche 1 bis 4, dadurch gekennzeichnet, daß als Füllstoffe pyrogene Kieselsäure mit einer spezifischen Oberfläche von oberhalb 50 m²/g eingesetzt wird.

## Claims

1. Process for the continuous production of crosslinking silicone rubbers based on crosslinkable diorganopolysiloxane(s), crosslinking agent(s), inhibitor(s), catalyst(s), filler(s), and filler loading agent(s), characterized in that in a continuous mixing apparatus
a) diorganopolysiloxane(s), filler(s), and loading agent(s) are mixed, with the air introduced with the filler being removed by domes in which filler particles and air are separated, and with the loading agent being applied in excess, the mixture is subsequently transferred to a further continuous mixing apparatus where the in-situ loading is performed at the boiling temperature of the loading agent and/or its reaction products,
b) before or during the in-situ loading of the fillers excess loading agent is removed continuously by distillation, and condensates are recycled,
c) the filler/polymer mixture remaining after b) and, optionally, additional diorganopolysiloxanes are degassed for re-dilution, and subsequently
d) crosslinking agent/inhibitor/diorganopolysiloxane or catalyst/diorganopolysiloxane or peroxide crosslinking agent are admixed,
wherein the average total residence-time of the diorganopolysiloxane in steps a) to c) is more than 15 minutes.

2. Process according to Claim 1, characterized in that hexamethyldisilazane, divinyltetramethyldisilazane and water are used as loading agents.

3. Process according to Claim 1, characterized in that trimethylsilanol, dimethylvinylsilanol and small amounts of aqueous solution of ammonia or, alternatively, hexamethyldisilazane/divinyltetramethyldisilazane/water are used as loading agents.

4. Process according to any one of claims 1 to 3, characterized in that the process steps are carried out in a large-volume mixing apparatus with free volume that is capable of being cooled.

5. Process according to any one of claims 1 to 4, characterized in that pyrogenic silica with a specific surface of above 50 m²/g is used as fillers.

## Revendications

1. Procédé de préparation continue de caoutchoucs de silicone qui se réticulent à base d'un ou de plusieurs diorganopolysiloxanes réticulables, d'un ou de plusieurs réticulants, d'un ou de plusieurs inhibiteurs, d'un ou de plusieurs catalyseurs, d'une ou de plusieurs charges et d'un ou de plusieurs agents de chargement de charge, caractérisé en ce que, dans un mélangeur continu:
a) le ou les diorganopolysiloxanes, la ou les charges et les agents de chargement sont mélangés, l'air introduit avec la charge étant retiré par l'intermédiaire de dômes dans lesquels a lieu la séparation des particules de charge et de l'air, et l'agent de chargement étant utilisé en excès, puis le mélange est transféré dans un autre mélangeur continu dans lequel est réalisé le chargement in situ à la température d'ébullition de l'agent de chargement et/ou de ses produits de réaction,
b) avant ou pendant le chargement in situ des charges l'agent de chargement en excès est séparé en continu par distillation, les condensats sont recyclés,
c) le mélange charge/polymère restant après b) et éventuellement des diorganosiloxane supplémentaires sont dégazés pour la dilution en retour, puis
d) le réticulant/inhibiteur/diorganopolysiloxane ou le catalyseur/diorganopolysiloxane ou le réticulant peroxyde y sont mélangés,
le temps de séjour total moyen du diorganopolysiloxane dans les étapes a) à c) étant supérieur à 15 min.

2. Procédé selon la revendication 1, caractérisé en ce que l'on utilise comme agent de chargement l'hexaméthyldisilazane, le divinyltétraméthyldisilazane et l'eau.

3. Procédé selon la revendication 1, caractérisé en ce que l'on utilise comme agent de chargement le triméthylsilanol, le diméthylvinylsilanol et de faibles quantités d'ammoniaque ou encore de l'hexaméthyldisilazane/divinyltétraméthyldisilazane/eau.

4. Procédé selon l'une des revendications 1 à 3, caractérisé en ce que les étapes du procédé sont accomplies dans un mélangeur à grand volume pouvant être refroidi comportant un volume libre.

5. Procédé selon l'une des revendications 1 à 4, caractérisé en ce que l'on utilise comme charges de l'acide silicique pyrogène ayant une surface spécifique supérieure à 50 m²/g.
